# DEMANDE DE BREVET EUROPEEN

(11) **EP 1 496 074 A1**
(43) Date de publication de la demande: **12.01.2005**
(21) Numéro de dépôt: 04102986.9
(22) Date de dépôt: 28.06.2004
(51) Int. Cl.: C08G 18/32, C08G 18/10, C09D 175/04

(54) **Utilisation d'un mélange bisphenol a diethoxyle / resorcinol diethoxyle (dianol 220 /HER) comme allongeur de chaîne de formulations élastomères de polyuréthanes.**

(30) Priorité: 11.07.2003 FR 0350323
(71) Demandeur: SOCIETE D'EXPLOITATION DE PRODUITS POUR LES INDUSTRIES CHIMIQUES ( S.E.P.P.I.C.), 75321 Paris Cedex 07 (FR)
(72) Inventeur: Da Costa, Georges Soc.d'Exploitation de Prod., 81090, Lagarrigue (FR); Rolland, Hervé Soc.d'Exploitation de Prod, 81100, CASTRES (FR); Muller, Daniel Soc. d'Exploitation de Prod, 94100, SAINT-MAUR (FR)
(74) Mandataire: Conan, Philippe Claude

(57) **Abrégé**

Composition caractérisée en ce qu'elle comprend :
- de 0,5 % en poids à 100 % d'un composé de formule (I) : 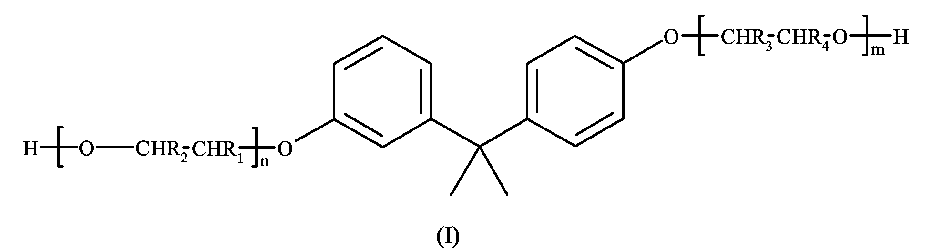
dans laquelle R₁, R₂, R₃ et R₄, représentent un atome d'hydrogène, un radical méthyle ou un radical éthyle,
n et m représentent un nombre compris entre 0 et10 étant entendu que la somme n + m est supérieure à zéro, et
- de 0% à 99,5 % en poids d'un composé de formule (II) : 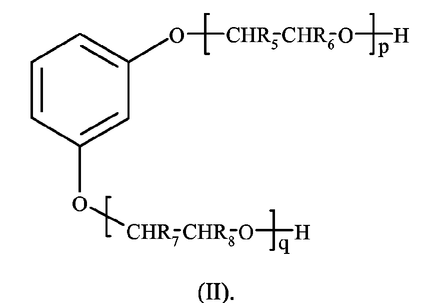
dans laquelle R₅, R₆, R₇ et R₈ représentent un atome d'hydrogène, un radical méthyle ou un radical éthyle,
p et q identiques ou différents représentent un nombre compris entre 0 et10 étant entendu que la somme n + m est supérieure à zéro. Utilisation comme allongeur de chaîne dans des formulations élastomères de polyuréthannes et/ou comme monomères dans la préparation de polyesters saturés ou insaturés, de polycarbonates ou de résines époxy.

## Description

L"invention s'inscrit dans le domaine de la préparation d'élastomères.

La préparation de polymères élastomères met souvent en oeuvre les composés allongeurs de chaînes qui ont pour fonction d'améliorer certaines propriétés physiques du polymère final, comme sa dureté, sa résistance à la chaleur ou sa résistance à l'hydrolyse.

Les allongeurs de chaîne les plus utilisés dans la préparation des polyuréthanes élastomères sont le butanediol-1,4 ou BDO : 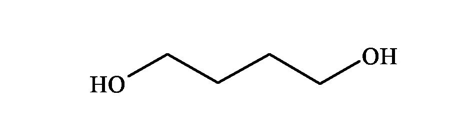 le 1,4 -bis[( 2-hydroxy éthyl) oxy] benzène ou HQEE : 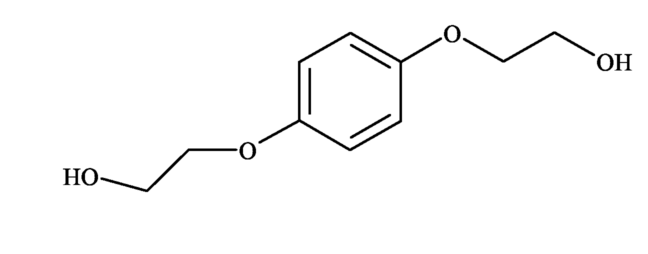 ou le résorcinol diéthoxylé ou HER :

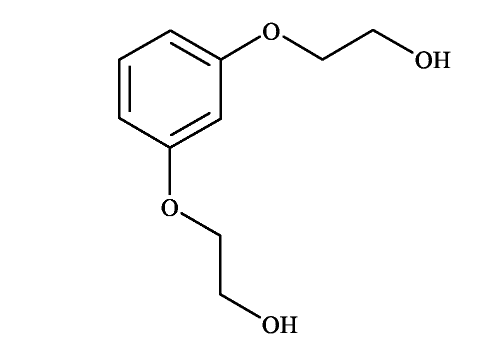

Dans le cadre de ses recherches sur les composés polyalcoxylés, la demanderesse, a développé un nouvel allongeur de chaîne qui améliore les propriétés physiques des polymères polyuréthanes.
c'est pourquoi l'invention a pour objet une composition caractérisée en ce qu'elle comprend
de 0,5 % en poids à 100 % d'un composé de formule (I) : 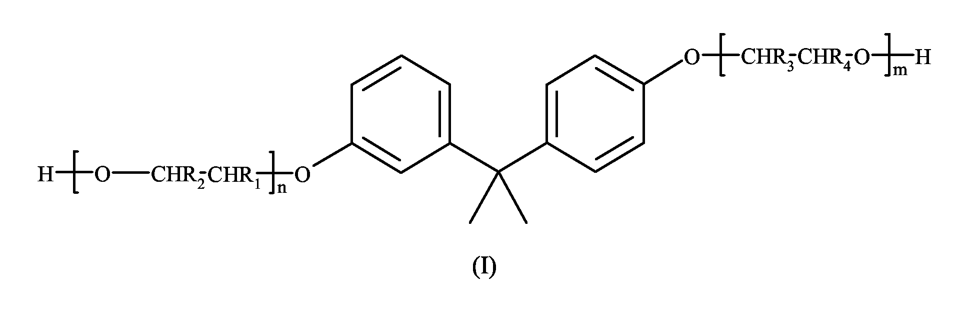 dans laquelle R₁, R₂, R₃ et R₄ identiques ou différents, représentent indépendamment, les uns des autres un atome d'hydrogène, un radical méthyle ou un radical éthyle,
n et m identiques ou différents, représentent indépendamment l'un de l'autre un nombre compris entre 0 et 10 étant entendu que la somme n + m est supérieure à zéro,
et
de 0% à 99,5 % en poids d'un composé de formule (II) : 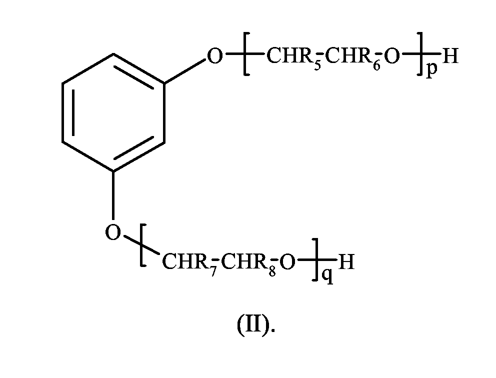 dans laquelle R₅, R₆, R₇ et R₈ identiques ou différents, représentent indépendamment, les uns des autres un atome d'hydrogène, un radical méthyle ou un radical éthyle,
p et q identiques ou différents représentent indépendamment l'un de l'autre un nombre compris entre 0 et 10 étant entendu que la somme p + q est supérieure à zéro.

Dans les formules (I) et (II) telles que définies précédemment, les radicaux :
-O-CHR₁-CHR₂-, -CHR₃-CHR₄-O-, -CHR₅-CHR₆-O- et -CHR₇-CHR₈-O-, représentent plus particulièrement, indépendamment les uns des autres un des radicaux divalents suivants :
- O-CH₂-CH₂-, -CH₂-CH(CH₃)-O-, -CH(CH₃)-CH₂-O-, -CH(C₂H₅)-CH₂-O- ou - CH₂-CH(C₂H₅)-O-.

Au sein de chacun des groupes -[O-CHR₁-CHR₂]ₙ-, -[CHR₃-CHR₄-O]ₘ-, -[CHR₅-CHR₆-O]ₚ- ou -[CHR₇-CHR₈-O]_{q}-, les radicaux -O-CH₂-CH₂-, -CH₂-CH(CH₃)-O-,
- CH(CH₃)-CH₂-O-, -CH(C₂H₅)-CH₂-O- ou -CH₂-CH(C₂H₅)-O-, sont distribués de façon séquencée ou aléatoire.

Selon un aspect particulier, l'invention a pour objet une composition telle que définie précédemment, pour laquelle dans la formule(I), R₁, R₂, R₃ et R₄, représentent chacun un atome d'hydrogène.

Selon un autre aspect particulier, l'invention a pour objet une composition telle que définie précédemment, pour laquelle dans la formule(II), R₄, R₅, R₆ et R₇, représentent chacun un atome d'hydrogène.

Selon encore un autre aspect particulier, l'invention a pour objet une composition telle que définie précédemment, comprenant de 10 % en poids à 60% en poids et de préférence de 15% en poids à 55 % en poids de composé de formule (I) et de 40% en poids à 90 % en poids et de préférence de 45 % en poids à 85 % en poids de composé de formule (II).

L'invention a tout particulièrement pour objet une composition telle que définie précédemment dans laquelle le composé de formule (I) est :le bisphénol A diéthoxylé de formule (Ia) : 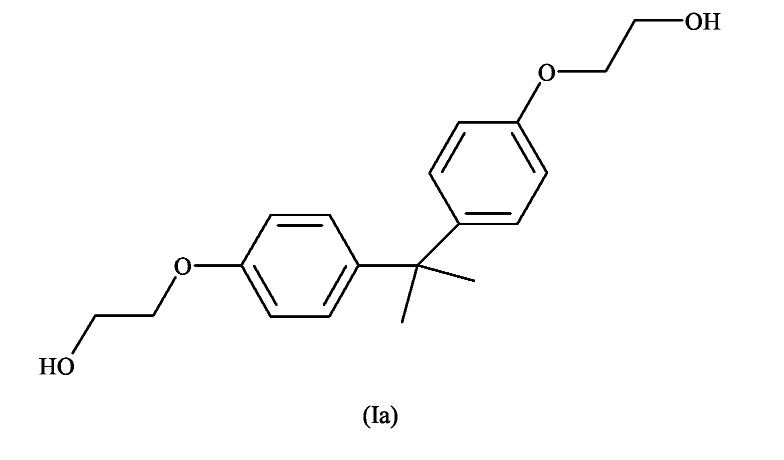 et dans laquelle le composé de formule (II) est le résorcinol diéthoxylé de formule (IIa) ! 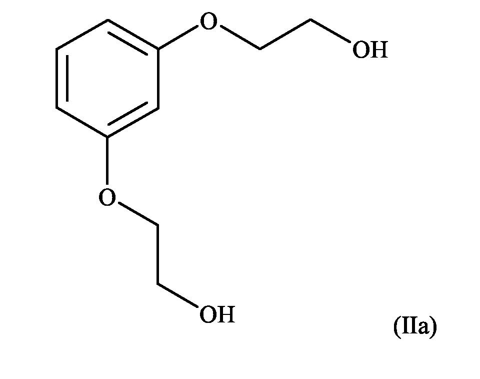 et de préférence pour objet une composition contenant de 30 % en poids à 50% en poids de composé de formule (Ia) et de 50% en poids à 70% en poids de composé de formule (IIa).

Selon un autre aspect, l'invention a aussi pour objet, l'utilisation de la composition telle que définie précédemment comme allongeur de chaîne dans une formulation élastomère de polyuréthannes ainsi qu'un procédé de préparation d'une formulation élastomère de polyuréthanne à partir de prépolymère isocyanate et d'une quantité efficace d'allongeur de chaîne, caractérisé en ce que ledit allongeur de chaîne est la composition telle que défmie précédemment.

Selon un dernier aspect, l'invention a pour objet, l'utilisation de la composition telle que définie précédemment, comme monomères dans la préparation de polyesters saturés ou insaturés, de polycarbonates ou de résines époxy.

L'exposé suivant illustre l'invention sans toutefois la limiter.

On prépare un mélange de 52 % en poids de résorcinol diéthoxylé et 48 % en poids de bisphénol A diéthoxylé dénommée composition E.

On prépare ensuite deux compositions élastomères en polyuréthanne selon un mode expérimental connu de l'homme du métier dont les paramètres sont consignés dans le tableau 1 suivant, à partir du Vibrathane™ B625 qui est un prépolymère isocyanate ayant un pourcentage en fonction isocyanate (-N-C=O) compris entre 6,2 et 6,9, d'un allongeur de chaîne, le butanediol 1,4 pour la formulation A selon l'état de la technique ou la composition E pour la formulation I selon l'invention.

**Tableau 1**

| **Formulation** | **Formulation A (base de comparaison)** | **Formulation I (invention)** |
|---|---|---|
| Vibrathane™ B625 (% NCO : 6029) | 100 g | 100 |
| Butanediol-1,4 | 6,41 g | 0 |
| composition E | 0 | 7,39 g |
| BYK™ A 530 (agent débullant) | 0,5 g | 0,5 g |
| Durée de vie en pot | 6 minutes | 21 minutes |
| **Paramètres de procédé** | | |
| Température du prépolymère | 85 °C | 85 °C |
| Température de l'allongeur | 85 °C | 85 °C |
| Température de cuisson | 120 °C | 120 °C |
| Temps d'agitation | 30 minutes | 30 minutes |
| Temps de cuisson | 4 heures | 4 heures |
| Temps de post cuisson | 16 heures | 16 heures |
| temps de maturation | 6 jours | 6 jours |
| Aspect de la formulation finale | opaque | légère transparence |
| Température vitreuse | - 69.7 °C | -55,7 °C |
| Température de fusion | 169,2°C | 157°C |

On évalue les propriétés mécaniques de chacune des formulations A et I, avant vieillissement, après vieillissement en étuve sèche et après vieillissement en étuve humide.

les résultats sont consignés dans les tableaux 2, 3 et 4 suivants

| **Tableau 2 : Propriétés mécaniques avant vieillissement** | | |
|---|---|---|
| | **Formulation A (comparaison)** | **Formulation I (invention)** |
| Dureté (selon la norme ISO 868) | 84 | 87 |
| Propriétés en traction (selon la norme ISO 37) | | |
| Contrainte à 100 % | 6,15 MPa | 7,34 MPa |
| Contrainte à 200 % | 9,16 MPa | 10,11 MPa |
| Contrainte à 300 % | 12,78 MPa | 12,93 MPa |
| Contrainte à la rupture | 20,01 MPa | 18,15 MPa |
| Elongation à la rupture | 450 % | 485 % |
| Module d'Young | 16,88 MPa | 22.15 MPa |
| Résistance à la déchirure (selon la norme ISO 34) | 44,43 kN/m | 69,63 kN/m |
| Résistance à l'abrasion (selon la norme ISO 9352) | 0,05 % | 0,17 % |
| Densité (selon la norme ISO 1183) | 1,03 | 1,04 |
| Rebond (selon la norme ISO 4662) | 69 | 60 |

**Tableau 3 :**

| **Propriétés mécaniques après vieillissement en étuve sèche** | | |
|---|---|---|
| | **Formulation A** | **Formulation I** |
| | **(comparaison)** | **(invention)** |
| **Vieillissement de 400 heures à 110 °C** | | |
| Aspect de l'élastomère | brun foncé, opaque | jaune, légèrement transparente |
| Dureté (selon la norme ISO 868) | 78 | 84 |
| Propriétés en traction (selon la norme ISO 37) | | |
| Contrainte à 100 % | 4,06 MPa | 5,80 MPa |
| Contrainte à 200 % | 5,63 MPa | 7,15 MPa |
| Contrainte à la rupture | 6,55 MPa | 8.35 MPa |
| Elongation à la rupture | 270 % | 290 % |
| Module d'Young | 11,32 MPa | 20,74 MPa |
| Aspect de l'élastomère | brun très foncé opaque | brun, légèrement transparente |
| Dureté (selon la norme ISO 868) | 74 | 84 |
| Propriétés en traction (selon la norme ISO 37) | | |
| Contrainte à 100 % | 3,45 MPa | 5.44 MPa |
| Contrainte à 200 % | 4,86 MPa | 6,24 MPa |
| Contrainte à la rupture | 5,53 MPa | 6,27 MPa |
| Elongation à la rupture | 230 % | 202 % |
| Module d'Young | 9,86 MPa | 19,68 MPa |
| Résistance à la déchirure (selon la norme ISO 34) | 22,45 kN/m | 41,63 kN/m |

**Tableau 4 :**

| **Propriétés mécaniques après vieillissement en étuve humide** | | |
|---|---|---|
| | **Formulation A (comparaison)** | **Formulation I (invention)** |
| **Vieillissement de 400 heures à 70 °C ; humidité : 98 %** | | |
| Aspect de l'élastomère | jaune | légèrement jaune |
| Dureté (selon la norme ISO 868) | 81 | 87 |
| Propriétés en traction (selon la norme ISO 37) | | |
| Contrainte à 100 % | 5,13 MPa | 6,49 MPa |
| Contrainte à 200 % | 7,83 MPa | 9,18 MPa |
| Contrainte à 300 % | 10,87 MPa | 11,70 MPa |
| Contrainte à la rupture | 17,08 MPa | 16,79 MPa |
| Elongation à la rupture | 440 % | 500 % |
| Module d'Young | 13,57 MPa | 19,09 MPa |
| Aspect de l'élastomère | jaune | légèrement jaune |
| Dureté (selon la norme ISO 868) | 80 | 87 |
| Propriétés en traction (selon la norme ISO 37) | | |
| Contrainte à 100 % | 5,07 MPa | 5.44 MPa |
| Contrainte à 200 % | 7,56 MPa | 6,24 MPa |
| Contrainte à 300 % | 10,77 MPa | 6,27 MPa |
| Contrainte à la rupture | 17,50 MPa | 16,84 MPa |
| Elongation à la rupture | 440 % | 500 % |
| Module d'Young | 13,38 MPa | 41,63 MPa |
| Résistance à la déchirure (selon la norme ISO 34) | 37,68 kN/m | 62.50 kN/m |

Ces résultats font clairement apparaître l'intérêt qu'il y a à utiliser la composition E selon l'invention comme allongeur de chaîne par rapport au butanediol-1,4, le produit le plus utilisé dans cette fonction.

## Revendications

1. Composition **caractérisée en ce qu'**elle comprend :
- de 0,5 % en poids à 100 % d'un composé de formule (I) : 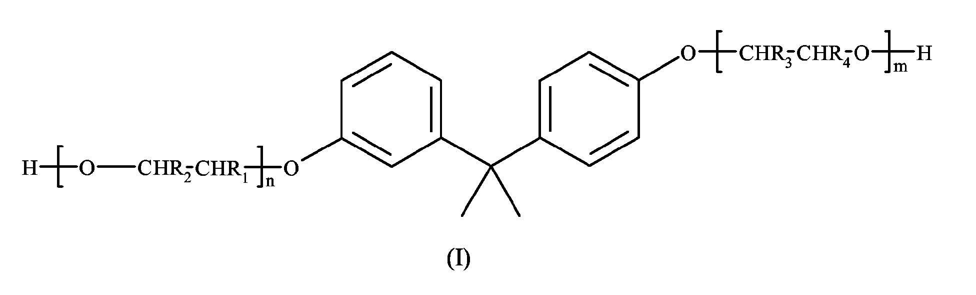
dans laquelle R₁, R₂, R₃ et R₄ identiques ou différents, représentent indépendamment, les uns des autres un atome d'hydrogène, un radical méthyle ou un radical éthyle,
n et m identiques ou différents, représentent indépendamment l'un de l'autre un nombre compris entre 0 et 10 étant entendu que la somme n + m est supérieure à zéro,
et
- de 0% à 99,5 % en poids d'un composé de formule (II) : 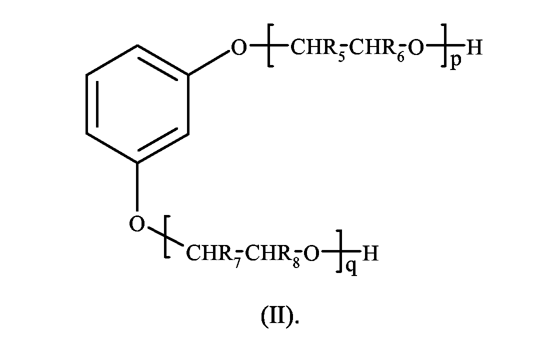
dans laquelle R₅, R₆, R₇ et R₈ identiques ou différents, représentent indépendamment, les uns des autres un atome d'hydrogène, un radical méthyle ou un radical éthyle,
p et q identiques ou différents, représentent indépendamment l'un de l'autre un nombre compris entre 0 et 10 étant entendu que la somme p + q est supérieure à zéro.

2. Composition telle que défmie précédemment, pour laquelle dans la formule(I), R₁, R₂, R₃ et R₄, représentent chacun un atome d'hydrogène.

3. Composition telle que définie à l'une des revendications 1 ou 2, pour laquelle dans la formule(II), R₄, R₅, R₆ et R₇, représentent chacun un atome d'hydrogène.

4. Composition telle que défmie à l'une des revendications 1 à 3, comprenant de 10 % en poids à 60% en poids et de préférence de 15% en poids à 55 % en poids de composé de formule (I) et de 40% en poids à 90 % en poids et de préférence de 45 % en poids à 85 % en poids de composé de formule (II).

5. Composition telle que définie à l'une des revendications 1 à 4, dans laquelle le composé de formule (I) est :le bisphénol A diéthoxylé de formule (Ia) : 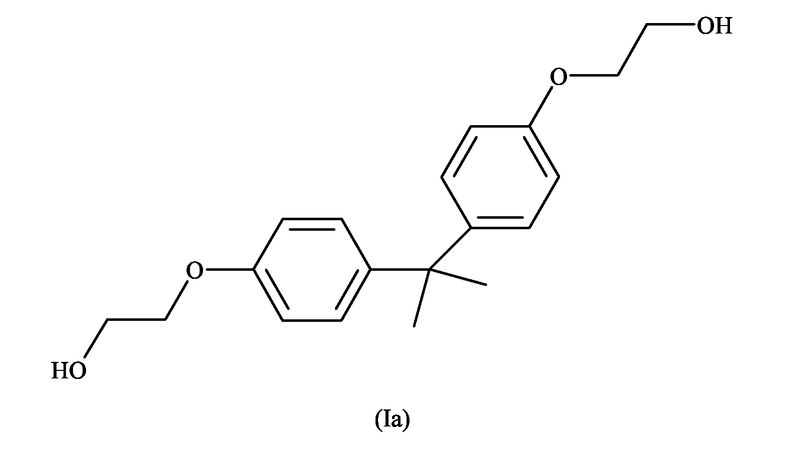 et dans laquelle le composé de formule (II) est le résorcinol diéthoxylé de formule (IIa) !

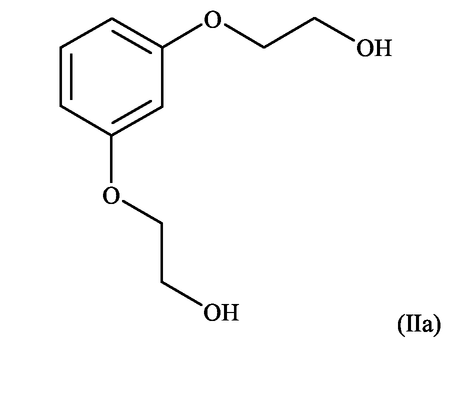

6. Composition telle que défmie à la revendication 5, contenant de 30 % en poids à 50 % en poids de composé de formule (Ia) et de 50 % en poids à 70 % en poids de composé de formule (IIa).

7. Utilisation de la composition telle que définie à l'une des revendications 1 à 6, comme allongeurs de chaîne dans une formulation élastomère de polyuréthannes.

8. Procédé de préparation d'une formulation élastomère de polyuréthanne à partir de prépolymère isocyanate et d'une quantité efficace d'allongeur de chaîne, **caractérisé en ce que** ledit allongeur de chaîne est la composition telle que définie à l'une des revendications 1 à 6.

9. Utilisation de la composition telle que définie à l'une des revendications 1 à 6, comme monomères dans la préparation de polyesters saturés ou insaturés, de polycarbonates ou de résines époxy.
